# EUROPEAN PATENT APPLICATION

(11) **EP 2 582 006 A1**
(43) Date of publication of application: **17.04.2013**
(21) Application number: 11185173.9
(22) Date of filing: 14.10.2011
(51) Int. Cl.: H02J 7/00, H02J 7/04

(54) **Charge control device**

(71) Applicant: Rohm Co., Ltd., Kyoto 615-8585 (JP)
(72) Inventor: Hara, Hideo, Kyoto 615-8585 (JP)
(74) Representative: Glawe, Delfs, Moll

(57) **Abstract**

A charge control device of the disclosure including a charger to perform a constant current charge control to maintain a charge current to an electric double-layer capacitor as a predetermined charge current value for a constant current charge period after a beginning of a charge of the electric double-layer capacitor.

## Description

### BACKGROUND OF THE INVENTION

### 1.Field of the Invention

This disclosure relates to a charge control device to perform a charge control for an electrical double-layer capacitor.

### 2. Description of Related Art

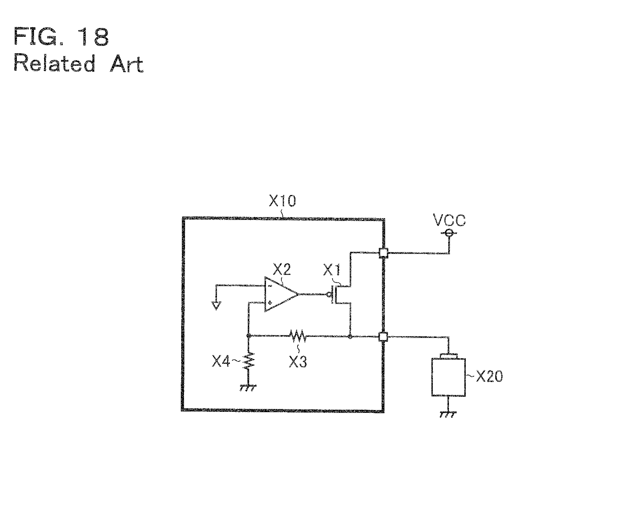

Fig. 18 is a circuit diagram showing an example of a charge control device for an electrical double-layer capacitor in accordance with the related art. The charge control device X10 with the related art divides a charge voltage for an electrical double-layer capacitor X20 by a resistor X3 and a resistor X4, and generates a divided voltage. Then, the charge control device X10 controls a conductivity of a PMOS FET [P type Metal Oxide Semiconductor Field Effect Transistor] X1 connected between the power source terminal (VCC terminal) and the electrical double-layer capacitor X20 by using an amplifier X2 to equalize the divided voltage with a predetermined reference voltage. Thus, the charge control device X10 has a construction that performs a charge control (i.e., constant voltage charge control) to maintain a charge voltage of the electrical double-layer capacitor X20 as a predetermined target voltage value.

As an example of related technique with respect to a charge control device of the secondary battery (e.g., a lithium ion battery), patent document 1 (Japanese patent publication No. 2009-95076) can be listed.

However, the charge control device X10 to perform a constant voltage charge control for the electrical double-layer capacitor X20 in accordance with the related art has three problems as below. (1) An inrush current is generated during a start period of a charge, (2) Hard to judge an abnormality of the electrical double-layer capacitor X20 (e.g., a breakdown of a positive terminal or a short between a positive terminal and a negative terminal), (3) Hard to control a charge current flowing to the electrical double-layer capacitor X20.

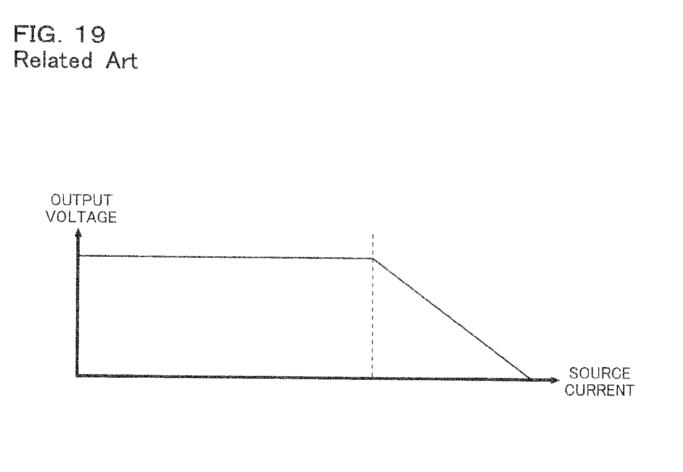

With respect to the problem (1), when a charge is started from a state of the electrical double-layer capacitor X20 is discharged fully, a large inrush current flows into the electrical double-layer capacitor X20. If an over current protection function is not provided to the charge control device X10, caused by a manufacturing fluctuation of a transistor X1 (i.e., fluctuations of a driving ability or a on-resistance), a drop start current of an output voltage also is fluctuated, then a charge time of the electrical double-layer capacitor X20 is fluctuated (in reference to Fig. 19).

Different from the secondary battery like a lithium ion battery, although the electrical double-layer capacitor X20 is not destroyed by an inrush current, unpredictable breakdown like a system down can be caused when a large load exhausts a power source circuit (i.e., a supplier of a power source voltage VCC) in accordance with an inrush current.

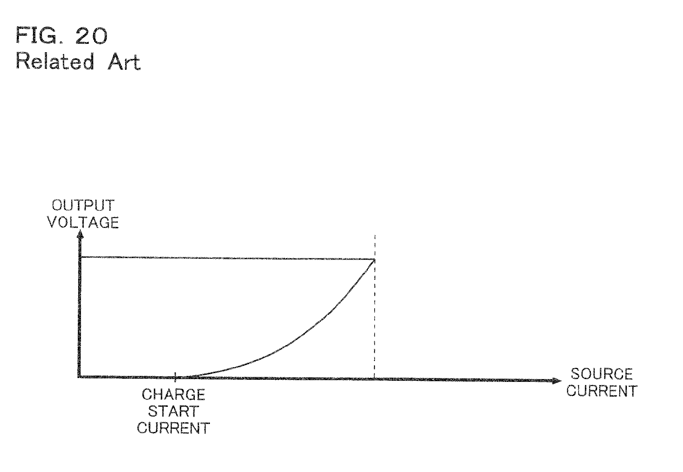

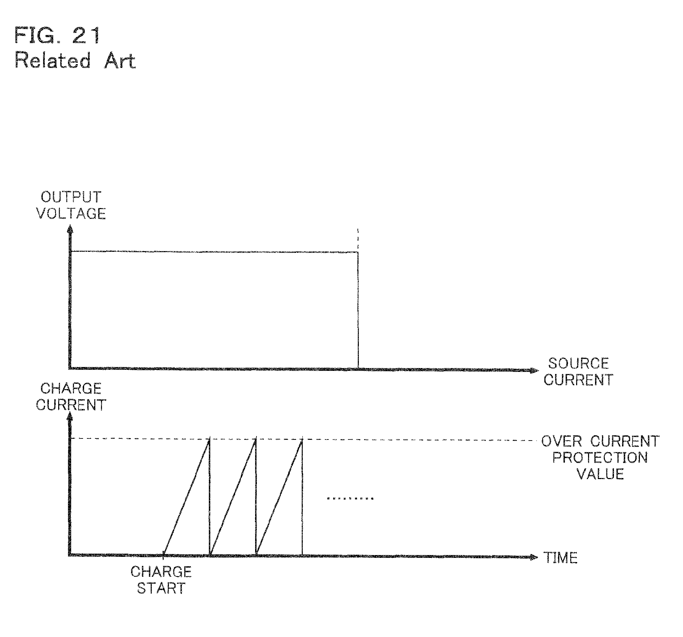

Therefore, an over current protection function to prevent an inrush current is provided for the charge control device X10. Examples of a known technique of an over current protection function are listed as a fold back characteristic type (in reference to Fig. 20) and a shut down type (in reference to Fig. 21).

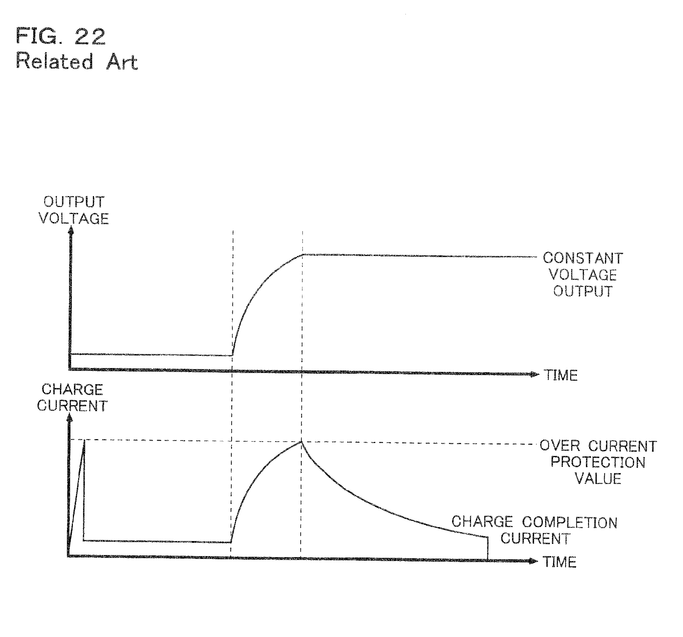

An over current protection function of the fold back characteristic type is to decrease an output voltage to prevent a breakdown of an internal circuit caused by an overheat or to prevent a breakdown of a peripheral circuit, when a charge current (a source current of the transistor X1) reached to a predetermined over current protection value (in reference to Fig. 22). However, when an over current protection function of the fold back characteristic type is adopted as an inrush current protection function for the charge control device X20, once an over current protection is activated, a charge operation does not resume unless a load becomes low. Thus, a long time is required to charge from a state of fully discharged.

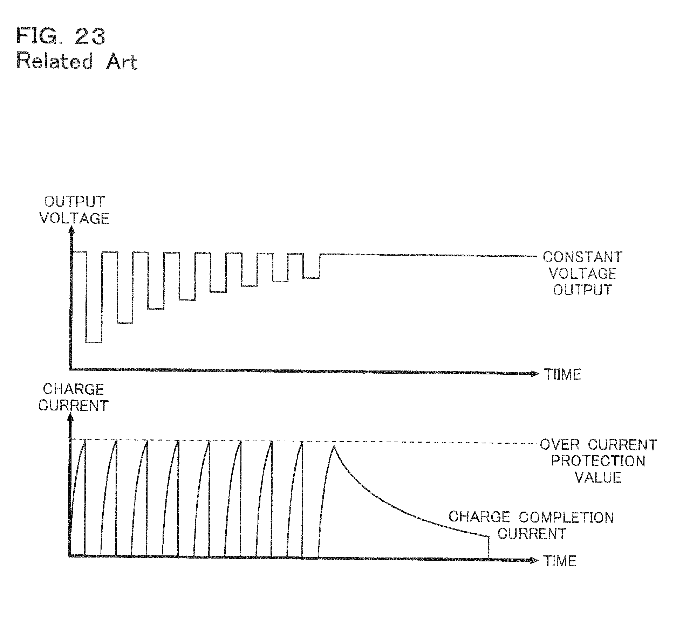

Meanwhile, an over current protect function of the shut down type is to repeat a shutdown and resume (without off-latch) of a charge operation until an inrush current does not reach to an over current protection value (in reference to Fig.23). However, when an over current protection function of the shut down type is adopted as an in rush current protection function for the charge control device X20 to perform a constant voltage charge control, there are problems like an inaccuracy of a charge time or a power loss during a shut down time.

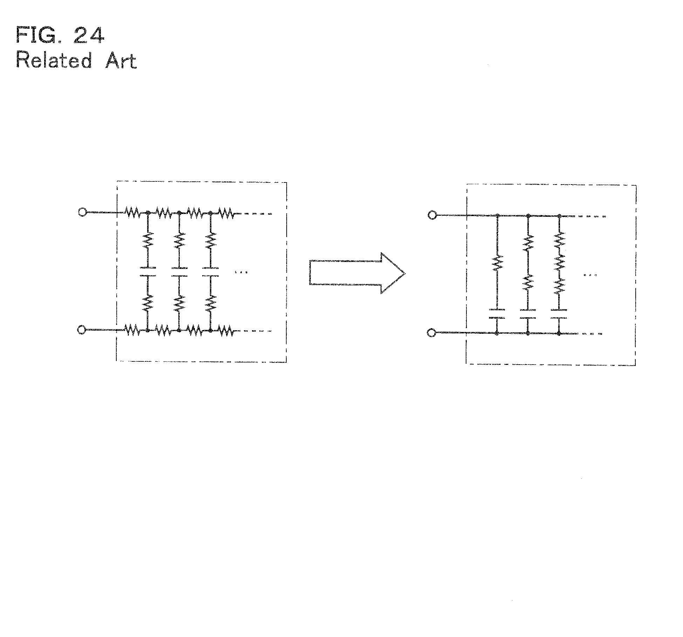

The electrical double-layer capacitor X20 is an equivalent to an aggregation of capacitor cells with a small capacitance connected in parallel with each other. ESR (Equivalent Series Resistance) component of capacitor cells closest to terminals (i.e., a positive terminal and a negative terminal) is the smallest, and a capacitor cell located in opposite side of the terminals has largest characteristic. Thus, ESR component of the cells are different from each other (in reference to Fig. 24). Therefore, with respect to the capacitor cells forming the electrical double-layer capacitor X20, AC impedance characteristic of the capacitor cell becomes larger if located far from both of the terminals (i.e., a positive terminal or a negative terminal).

Therefore, when a constant voltage charge control for the electrical double-layer capacitor X20 is performed, a capacitor cell with the smallest ESR component closest to the terminals (i.e., a positive terminal and a negative terminal) is charged fully faster than other capacitor cells. Thus, a voltage of the positive terminal is judged as reached to a charge target value even a capacitor cell located far from the terminals is not charged fully. Thereafter, to compensate for a voltage drop of the positive terminal caused by the redistribution of the electrical charge occurs in capacitor cells with each other, the constant voltage charge control is performed continuously. As a result, a charge current flowing to the electrical double-layer capacitor X20 decreases with the lapse of time, there is a problem that a long time is required to full charge.

An electrical double-layer capacitor is used for a large electrical apparatus (e.g., a copy machine or an air conditioner) that consumes large energy consumption, therefore above mentioned problem is not a serious problem. However, accompanied with a miniaturization of the size, recently the electrical double-layer capacitor is being used for a small electrical apparatus (e.g., a receiver of a television or a cell phone). With respect to a small electrical apparatus as such, shortening of a charge time and a reduction of a load of a power source circuit are required strongly. Therefore, a charge technique (i.e., constant voltage charge control) with the related art that has aforementioned problem, can not be adopted to a small electrical apparatus without change.

### SUMMARY OF THE INVENTION

Therefore, in view of the aforementioned problems found by the inventor of this application, the disclosure provides a charge control device to charge an electrical double-layer capacitor properly.

To attain the object suggested above, a charge control device of the disclosure including a charger to perform a constant current charge control to maintain a charge current to an electric double-layer capacitor as a predetermined charge current value for a constant current charge period after a beginning of a charge of the electric double-layer capacitor.

Other features of the disclosure, elements, steps, and advantages, and characteristics will be apparent from the following description and the drawings and the claims.

### BRIEF DESCRIPTION OF THE DRAWINGS

Fig. 1 is a block diagram showing an implementation of a charge control device in accordance with the disclosure.
Fig. 2 is a diagram to explain terminals.
Fig. 3 is a timing chart to explain a start-up operation.
Fig. 4 is a timing chart to explain an OVP operation.
Fig. 5 is a timing chart to explain a LVP operation.
Fig. 6 is a circuit diagram showing a construction example of a signal output portion 30.
Fig. 7 is a circuit diagram showing a construction example of a first signal input portion 40.
Fig. 8 is a pattern diagram to explain a detection operation of a remote control signal.
Fig. 9 is a circuit diagram showing an example of a second signal input portion 50.
Fig. 10 is a block diagram showing a construction example of a power system circuit.
Fig. 11 is a timing chart to explain a power selecting operation.
Fig. 12 is a timing chart to explain a CC/CC charge control.
Fig. 13 is a timing chart to explain a CC/CV charge control.
Fig. 14 is a timing chart to explain a CC/CC/CV charge control.
Fig. 15 is a circuit diagram showing a fist construction example (CC/CC/CV) of a charger 10.
Fig. 16 is a circuit diagram showing a second construction example (CC/CV) of a charger 10.
Fig. 17 is a circuit diagram showing a third construction example (CC/CC) of a charger 10.
Fig. 18 is a circuit diagram showing an example of a charge control device in accordance with the related art.
Fig. 19 is a diagram to explain a fluctuation of a drop start current of an output voltage.
Fig. 20 is a diagram to explain an OCP operation of fold back characteristic type (I-V).
Fig. 21 is a diagram to explain an OCP operation of shut down type (I-V, t-I).
Fig. 22 is a diagram to explain an OCP operation of fold back characteristic type (t-V, t-I)
Fig. 23 is a diagram to explain an OCP operation of shut down type (t-V, t-I).
Fig. 24 is an equivalent circuit diagram of an electrical double-layer capacitor.

### DETAILED DESCRIPTION OF PREFERRED EMBODIMENTS

### <entire block diagram>

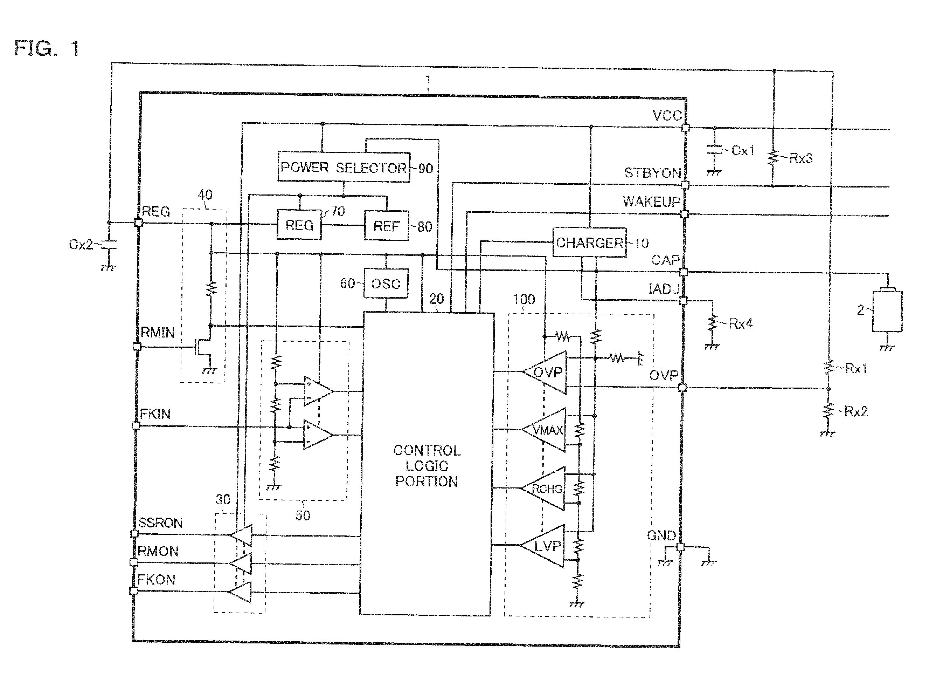

Fig. 1 is a block diagram showing an implementation of a charge control device in accordance with the disclosure. A charge control device 1 is a charge control IC to perform a charge control for the electrical double-layer capacitor 2, and includes a charger 10, a control logic portion 20, an signal output portion 30, a first signal input portion 40, a second signal input portion 50, an oscillator 60, a regulator 70, a reference voltage generator 80, a power selector 90, and a voltage detector 100.

The charger 10 performs a charge control for the electrical double-layer capacitor 2. A construction and an operation of the charger 10 are described later.

The control logic portion 20 controls an overall operation of the charge control device 1 totally. Therefore, in the following description of an operation, with respect to an operation mainly controlled by the charge control device 1, the control logic portion 20 controls practically.

The signal output portion 30 outputs a relay control signal of a power source provided from the control logic portion 20, a switch ON signal of a remote controller signal channel, and a switch ON signal of a five key signal channel.

The first signal input portion 40 receives a remote controller detection signal provided from outside and transmits the signal to the control logic portion 20.

The second input portion 50 receives a five key detection signal provided from outside and transmits the signal to the control logic portion 20.

The oscillator 60 generates a clock signal with a predetermined frequency and provides it to the control logic portion 20.

The regulator 70 generates a regulator voltage VREG (3.3V) based on a selected voltage (VCC/VCAP) by the power selector 90.

The reference voltage generator 80 generates a reference voltage VREF used in the charge control device 1 based on a selected voltage (VCC/VCAP) by the power selector 90.

The power selector 90 selects a higher voltage between the power source voltage VDD and the charge voltage VCAP, and outputs the selected voltage.

The voltage detector 100 compares the charge voltage VCAP of the electrical double-layer capacitor 2 with respective four values of the overvoltage protection value VOVP, the charge target value VMAX, the charge resume judgment value VRCHG, and the low voltage protection value VLVP. Then the voltage detector 100 outputs results of respective comparisons to the control logic portion 20.

### <external terminals>

As terminals to connect to an external apparatus electrically, the charge control device 1 includes a REG terminal, a RMIN terminal, a FKIN terminal, a SSRON terminal, a RMON terminal, a FKON terminal, a VCC terminal, a STBYON terminal, a WAKEUP terminal, a CAP terminal, a IADJ terminal, a OVP terminal, and a GND terminal.

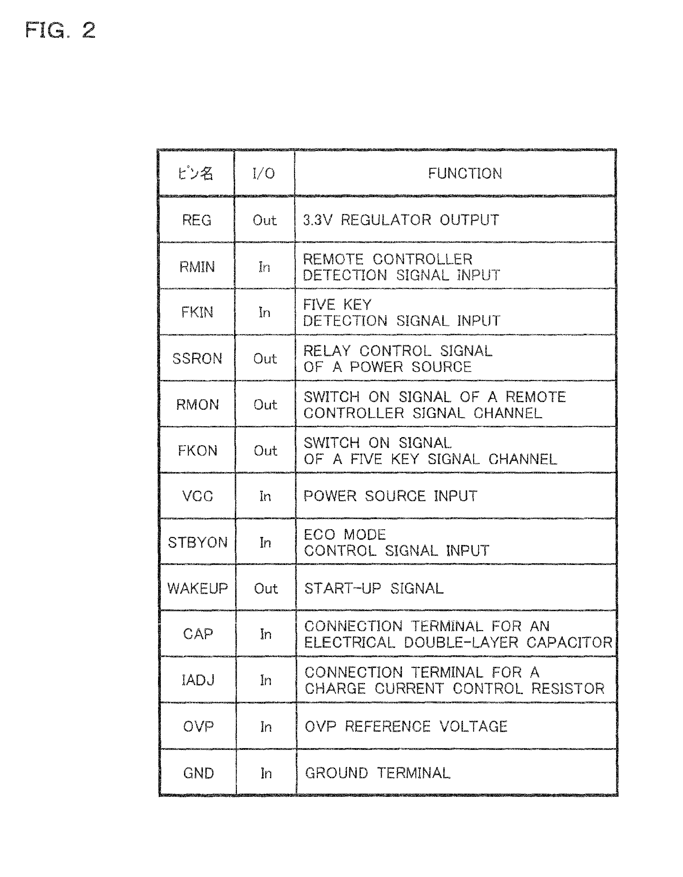

Fig. 2 is a diagram to explain terminals of the charge control device 1. The REG terminal is a 3.3 V regulator output terminal. The RMIN terminal is an input terminal for a remote controller detection signal. The FKIN terminal is an input terminal for a five key detection signal. The SSRON terminal is an output terminal for a relay control signal of a power source. The RMON terminal is a switch ON terminal for a remote controller signal channel. The FKON terminal is a switch ON terminal for the five key signal channel. The VCC terminal is a power source input terminal. The STBYON terminal is an input terminal for an eco mode control signal. The WAKEUP terminal is an output terminal for a startup signal. The CAP terminal is a terminal to connect the electrical double-layer capacitor 2. The IADJ terminal is a terminal to connect a resistor Rx4 for a charge current control. The OVP terminal is a terminal to set the OVP reference voltage. The GND terminal is the ground terminal.

### <external devices>

The resistors Rx1 to Rx4 and the capacitors Cx1 and Cx2 are connected to the charge control device 1 externally. The resistors Rx1 and Rx2 construct a resistor ladder to set an over voltage protection value VOVP by dividing the regulator voltage VREG. The resistor Rx3 is a pull up resistor connected between the STBYON terminal and the REG terminal. The resistor Rx4 is a resistor to set a charge current, and which is connected to the IADJ terminal. The capacitor Cx1 is an input smoothing capacitor connected to the VCC terminal. The capacitor Cx2 is an output smoothing capacitor connected to the REG terminal.

### <start-up operation>

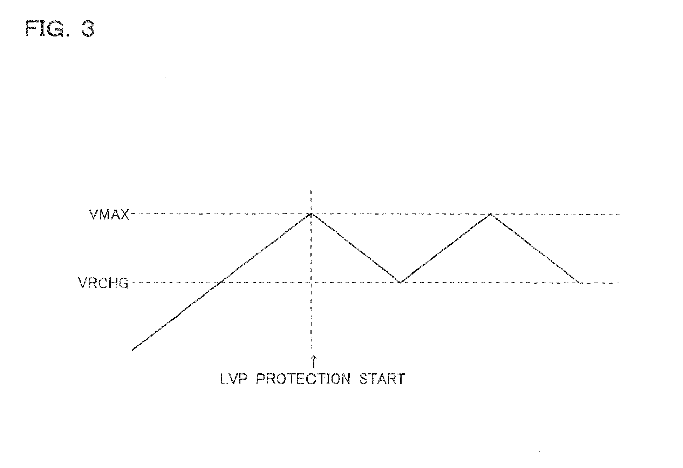

Fig. 3 is a timing chart to explain a start-up operation. An internal circuit is reset when the power source is supplied to the charge control device 1 via the VCC terminal or the CAP terminal. After the reset, the low voltage protection function is invalidated (i.e., mask state) until the charge voltage VCAP reaches to the charge target value VMAX for the first time. After the charge voltage VCAP reached to the charge target value VMAX, the charge control device 1 performs an intermittent operation in accordance with the charge voltage supplied from the CAP terminal. The charge voltage VCAP swings between the charge target value VMAX and the charge resume judgment value VRCHG.

### <OVP [Over Voltage Protection] operation>

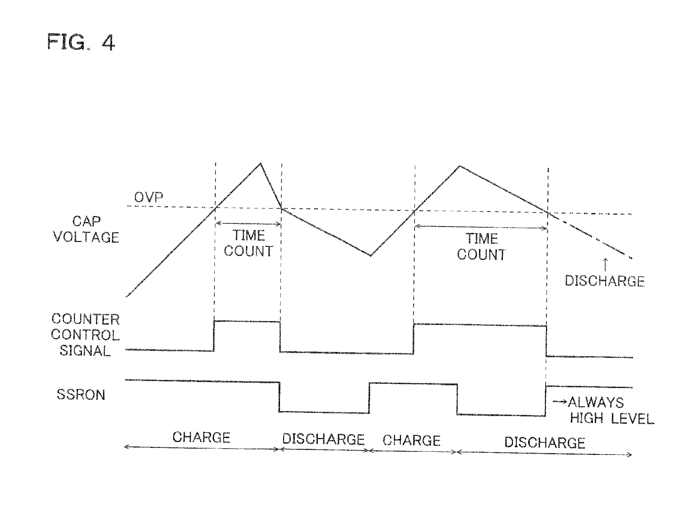

Fig. 4 is a timing chart to explain an OVP operation. The charge voltage VCAP, the counter control signal, and a SSRON signal are described. If the charge voltage VCAP is larger than the over voltage protection value VOVP for a predetermined period, the charge control device 1 detects the overvoltage state of the charge voltage VCAP. If the overvoltage state is detected, the charge control device 1 fixes the SSRON signal at a high level to stop a charge to the electrical double-layer capacitor 2. If the charge voltage VCAP is smaller than the over voltage protection value VOVP during the predetermined period, the charge control device 1 continues a normal operation.

### <LVP [Low Voltage Protection] operation>

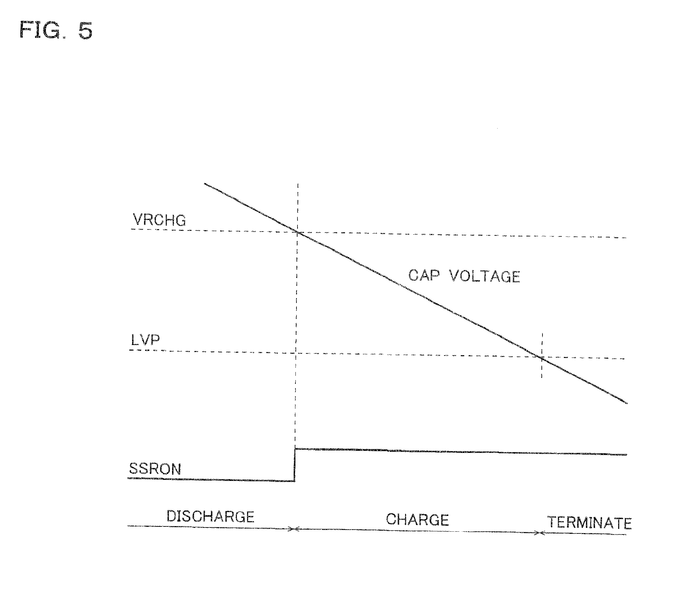

Fig. 5 is a timing chart to explain a LVP operation. If the charge voltage VCAP is lower than the low voltage protection value VLVP, the charge control device 1 detects that the charge voltage VCAP is a state of a low voltage. If the state of the low voltage is detected, the charge control device 1 fixes the SSRON at a high level to stop a charge to the electrical double-layer capacitor 2.

### <CAP protection detection operation>

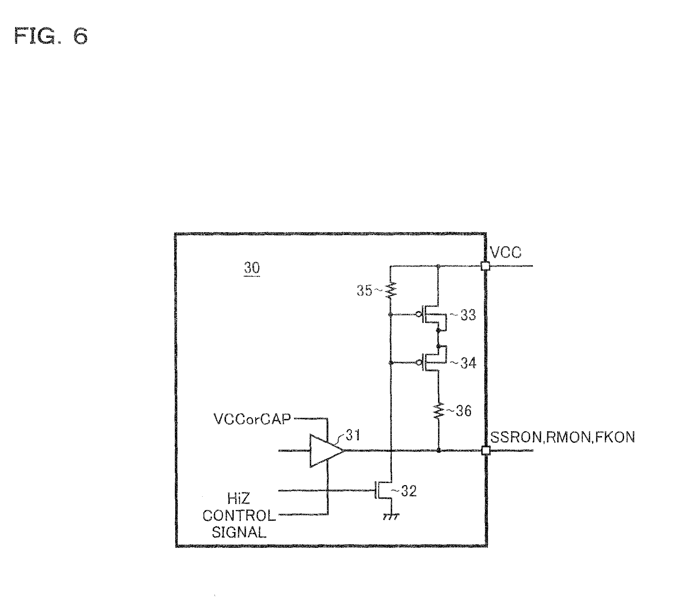

Fig. 6 is a circuit diagram showing a construction example of the signal output portion 30. The output portion 30 of this implementation includes a buffer 31, a NMOS FET (Field Effect Transistor) 32, PMOS FETs 33 and 34, and the resistors 35 and 36. An input terminal of the buffer 31 is connected to the control logic portion 20. An output terminal of the buffer 31 is connected to the SSRON terminal (i.e., an output terminal of the buffer 31 also is connected to the RMON terminal or the FKON terminal). A drain terminal of the transistor 32 is connected to the VCC terminal via the resistor 35. A source terminal of the transistor 32 is connected to the ground terminal. A gate terminal of the transistor 32 is connected to the control logic portion 20. A drain terminal of the transistor 33 is connected to the VCC terminal. A source terminal of the transistor 33 is connected to a source terminal of the transistor 34. A drain terminal of the transistor 34 is connected to the SSRON terminal via the resistor 36. Both gate terminals of the transistors 33 and 34 are connected to a drain terminal of the transistor 32.

If an abnormality of the charge voltage VCAP is detected, the charge control device 1 terminates a charge operation of the charge control device 1, then the SSRON terminal, the RMON terminal, and the FKON terminal are set at a high level. The transistors 32 to 34 are turned ON and the SSRON terminal, the RMON terminal, and the FKON terminal are pulled up to the power source voltage Vcc.

After that, although an operation of the control logic portion 20 is stopped (a state of a freeze), the regulator 70 is maintained as active state to stabilize an internal operation. While the charge control device 1 is switching a power source voltage supplied from the VCC terminal or the CAP terminal automatically by using the power selector 90, a external current load can not be provided to the charge control device 1. While an operation of the control logic portion 20 is stopped, a power source voltage is supplied from the VCC terminal.

### <remote control detection>

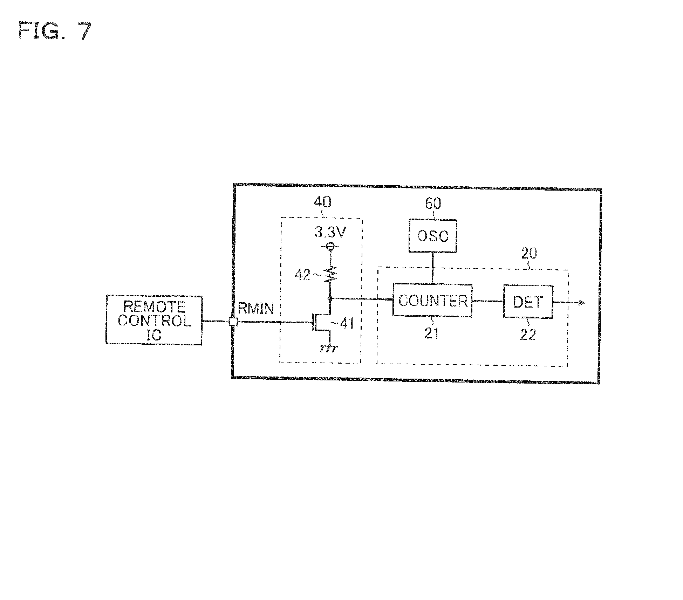

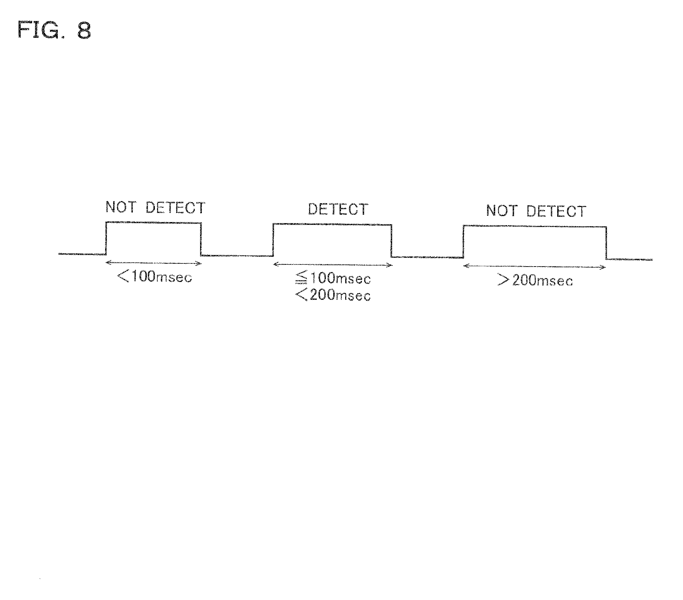

Fig. 7 is a circuit diagram showing a construction example of a first signal input portion 40. The first signal input portion 40 of the implementation includes a NMOS FET 41, and a resistor 42. A drain terminal of the transistor 41 is connected to a voltage applying terminal of the regulator voltage VREG via the resistor 42, and also connected to an input terminal of the counter 21 included in the control logic portion 20. A source terminal of the transistor 41 is connected to the ground terminal. A gate terminal of the transistor 41 is connected to the RMIN terminal. With respect to the counter 21, a high level signal is provided from a remote controller IC connected to the RMIN terminal. If the transistor 41 is turned ON, the counter 21 starts a count of number of pulses of a clock signal provided from the oscillator 60. A detector 22 included in the control logic portion 20 detects a count value of the counter 21, as shown in Fig. 8, if the high level signal provided from the remote controller IC continues for 100msec to 200msec, then judges as a signal is provided from the remote controller IC. As a result, a high level signal is provided from the RMON terminal.

### <five key detection>

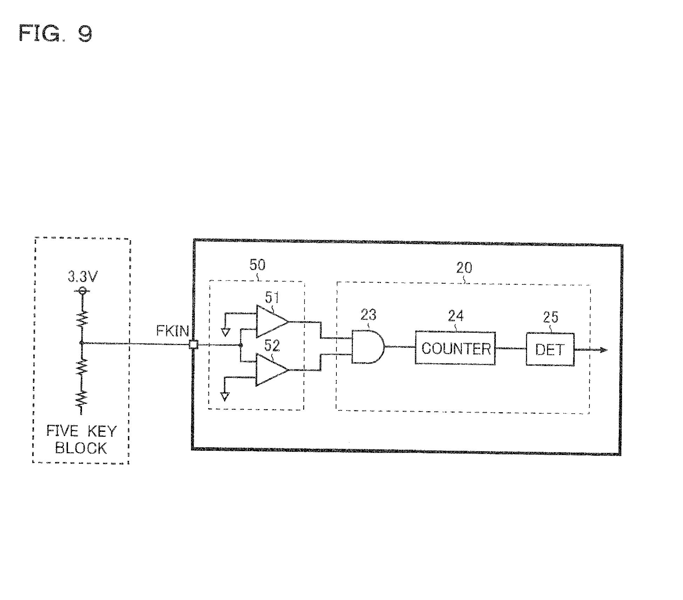

Fig. 9 is a circuit diagram showing a construction example of a second signal input portion 50. The second signal input portion 50 of the implementation includes comparators 51 and 52 to compare the terminal voltage of the FKIN with two kinds of threshold voltages. A logical multiply operation circuit 23 included in the control logic portion 20 logically multiplies output signals of the comparator 51 and 52, and outputs a result signal. With respect to a counter 24 included in the control logic portion 20, when a high level signal is provided from a five key block connected to the FKIN terminal, and when the logical multiply operation circuit 23 outputs a high level signal, the counter 24 starts a count of a number of pulses provided from the oscillator 60. The detector 25 included in the control logic portion 20 detects a count value of the counter 24. If a high level signal from the five key block continues more than 100msec, then the detector 25 judges as a input signal from the five key block. Then a high level signal is provided from the FKON terminal.

### <3.3V regulator>

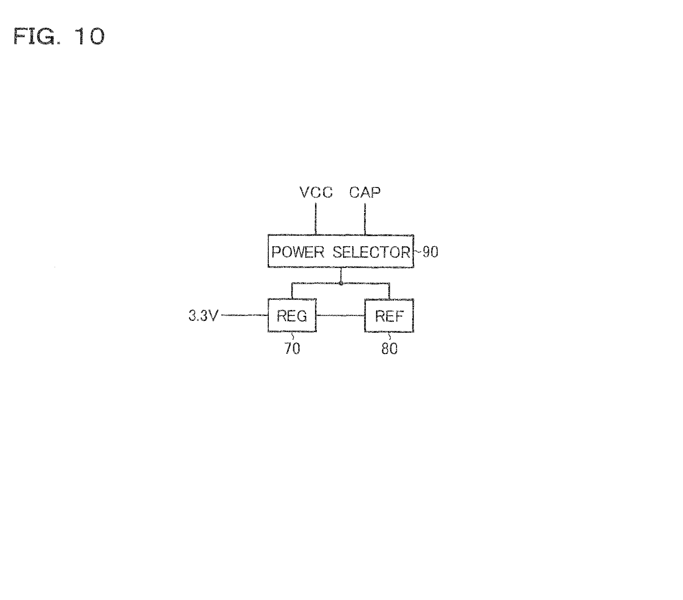

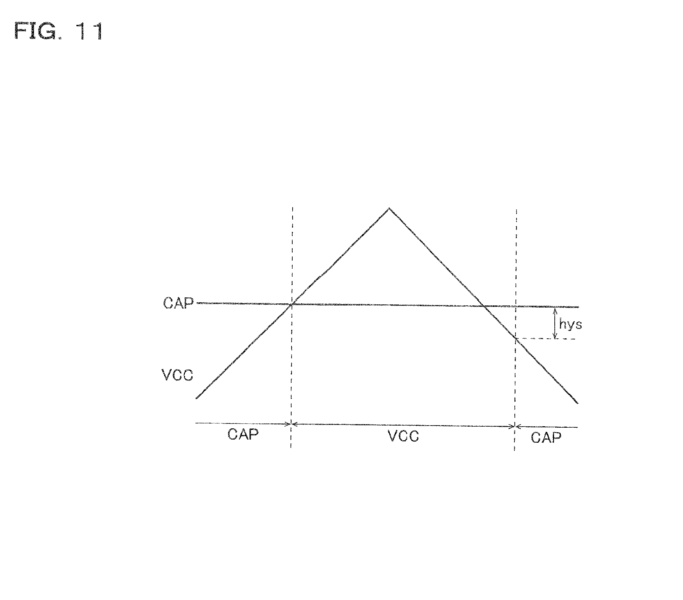

Fig. 10 is a block diagram showing a construction example of a power system circuit (the regulator 70, the reference voltage generator 80, and the power selector 90). The regulator 70 supplies a power source for both internal and external circuits of the charge control IC. A current output capacity of the regulator 70 is 20mA at the maximum. The power selector 90 compares the power source voltage VCC with the charge voltage VCAP and outputs a higher voltage automatically. As shown in Fig. 11, if the power source voltage VCC is higher than the charge voltage VCAP, then the power selector 90 outputs the power source voltage VCC selectively. If the power source voltage VCC drops to a voltage calculated based on a subtraction of a predetermined hysteresis from the charge voltage VCAP (i.e., VCAP - hys), then the power selector 90 outputs the charge voltage VCAP selectively.

### <a charge control operation of the electrical double-layer capacitor>

A charge control operation of the electrical double-layer capacitor 2 by the charger 10 is described below in reference to three technique examples (i.e., CC/CC [Constant Current/Constant Current], CC/CV [Constant Current/ Constant Voltage], and CC/CC/CV).

### <CC/CC charge control>

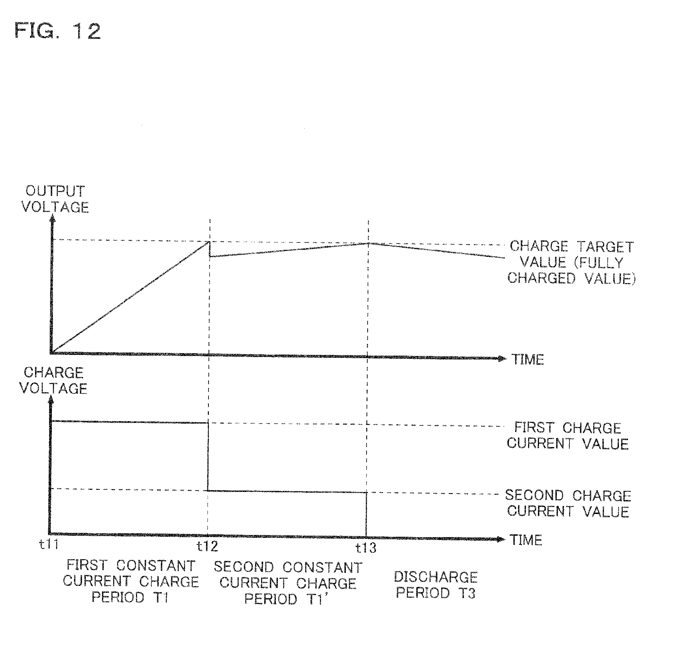

Fig. 12 is a timing chart to explain a CC/CC charge control by the charger 10. An output voltage (i.e., the charge voltage VCAP to the electric double-layer capacitor 2) to the electric double-layer capacitor 2 is illustrated at an upper part of Fig. 12, and a charge current to an electric double-layer capacitor 2 is illustrated at a lower part of Fig. 12.

The charger 10 starts charge to the completely discharged electrical double-layer capacitor 2 (a state of no electrical charge is charged) at time t11, and performs a constant current charge control to maintain a charge current to the electrical double-layer capacitor 2 as a first charge current value for a first constant current charge period T1 (time 11 to time 12). The first constant current charge period T1 is a period with a charge current to the electrical double-layer capacitor 2 is maintained as the first charge current until the charge voltage of the electric double-layer capacitor 2 rises to a predetermined charge target value (a fully charged value).

This construction to perform a constant current charge control to the electrical double-layer capacitor 2 at the beginning of a charge, makes it possible to prevent an inrush current without using an over current protection function. If an output voltage does not rise for a predetermined period, it can be judged as an abnormality (a breakdown of a positive terminal or short between a positive terminal and a negative terminal) of the electrical double-layer capacitor 2 easily.

With respect to a construction to perform a constant current charge control to the electrical double-layer capacitor 2 at the beginning of a charge, by setting the first charge current value properly in view of AC characteristic of ESR component of the electrical double-layer capacitor 2, an output voltage (an inclination of rising curve) can be set properly. Thus, a balance between shortening of a charge time and a load reduction of the power source circuit can be optimized.

For example, when equipping the charge control device 1 to an apparatus (i.e., electrical devices) which requires a shortening of a charge time to the electrical double-layer capacitor 2 as much as possible, the first charge current value is set to maximize an integral value of a charge current during the first constant current charge period T1. Also, when equipping the charge control device 1 to an apparatus (i.e., electrical devices) which requires a reduction of a load to the power source circuit as much as possible, the first charge current value can be set to a small value in accordance with a current supply ability of the power source circuit.

If an output voltage reaches to a predetermined charge target value at time t12 and after the lapse of the first current charge period T1 (i.e., charged fully by the first charge current), an output voltage to the electrical double-payer capacitor 2 decreases in accordance with a redistribution of an electrical charge among the capacitor cells constructing the electrical double-layer capacitor 2.

Therefore, after the lapse of time t12, the charger 10 performs a constant current charge control to maintain a charge current to the electrical double-layer capacitor 2 as a second charge current value (the first charge current value is larger than the second charge current value) for a second constant current charge period T1' (i.e., time t12 to time t13). The second constant current charge period T1' is a period with a charge current to the electrical double-layer capacitor 2 is maintained as the second charge current until the charge voltage of the electric double-layer capacitor 2 rises to a predetermined charge target value.

Thus, the CC/CC charge control for the charger 10 lowers the charge current value to the electrical double-layer capacitor 2 gradually and the constant current charge period is set repeatedly. Adopting of this charge technique makes it possible to continue a charge to the electrical double-layer capacitor 2 efficiently (i.e., a charge to compensate for a voltage drop caused by a redistribution among capacitor cells, and a charge to a fully discharged capacitor cell) after the lapse of the first constant current charge period T1.

### <CC/CV charge control>

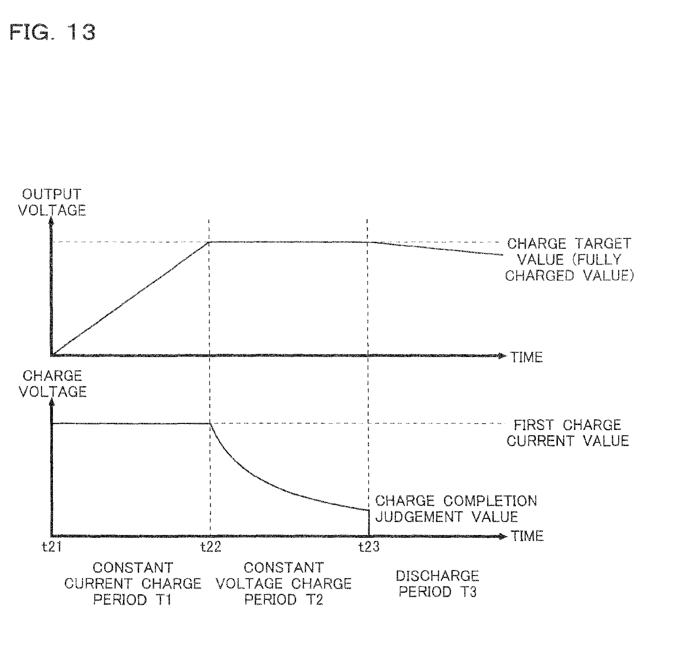

Fig. 13 is a timing chart to explain a CC/CV charge control by the charger 10. An output voltage (i.e., the charge voltage VCAP to the electric double-layer capacitor 2) to the electric double-layer capacitor 2 is illustrated at an upper part in Fig. 13, and a charge current to an electric double-layer capacitor 2 is illustrated at a lower part in Fig. 13.

Time t21 to time t22 in Fig. 13 equals to a constant current charge period T1 same as time t11 to time t12 in Fig. 12, so a duplicated explanation is omitted. After the output voltage reaches to a predetermined charge target value at time t22 and the lapse of the first constant current charge period T1, for the constant voltage charge period T2 (i.e., time t22 to time t23), the charger 10 performs a constant voltage charge control to maintain a charge voltage at a charge target value. The constant voltage charge period T2 is a period with a charge voltage to the electrical double-layer capacitor 2 is maintained as the charge target value until the charge current of the electric double-layer capacitor 2 drops to a charge completion judgment value.

With respect to the CC/CV charge control for the charger 10, when an output voltage reached to a charge target value after the lapse of the constant current charge period T1, by starting a constant voltage charge control, a charge (i.e., a charge to compensate for a voltage drop caused by a redistribution among capacitor cells, and a charge to fully discharged capacitor cells) of the electrical double-layer capacitor 2 can be continued without the aforementioned switching control like the CC/CC charge control.

### <CC/CC/CV charge control>

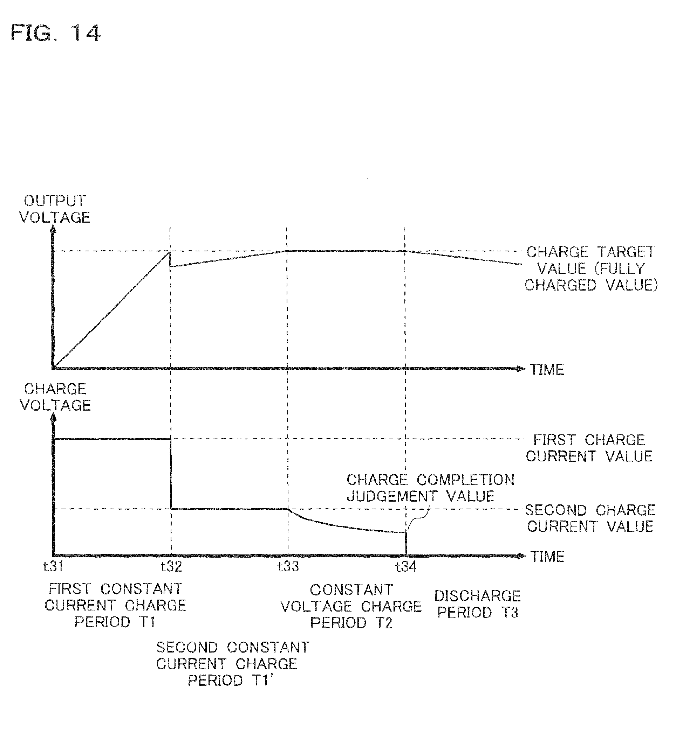

Fig. 14 is a timing chart to explain a CC/CC/CV charge control by the charger 10. An output voltage (i.e., the charge voltage VCAP to the electrical double-layer capacitor 2) to the electric double-layer capacitor 2 is illustrated at an upper part in Fig. 14, and a charge current to an electric double-layer capacitor 2 is illustrated at a lower part Fig. 14.

Time t31 to time t32 in Fig. 14 equals to a constant current charge period T1 same as time t11 to time t12 in Fig. 12. Time t32 to time t33 in Fig. 14 equals to a constant current charge period T1'same as time t12 to time t13 in Fig. 12. Time t33 to time t34 in Fig. 14 equals to a constant voltage charge period T2 same as time t22 to time t23 in Fig. 13.

In other word, the CC/CC/CV charge control by the charger 10 is a combination between the CC/CC charge control and the CC/CV charge control. Adopting of this charge technique makes it possible to shortening a charge time by the constant current charge control, and charge capacity of the electrical double-layer capacitor 2 can be used fully by the constant voltage charge control.

### <circuit construction of the charger 10>

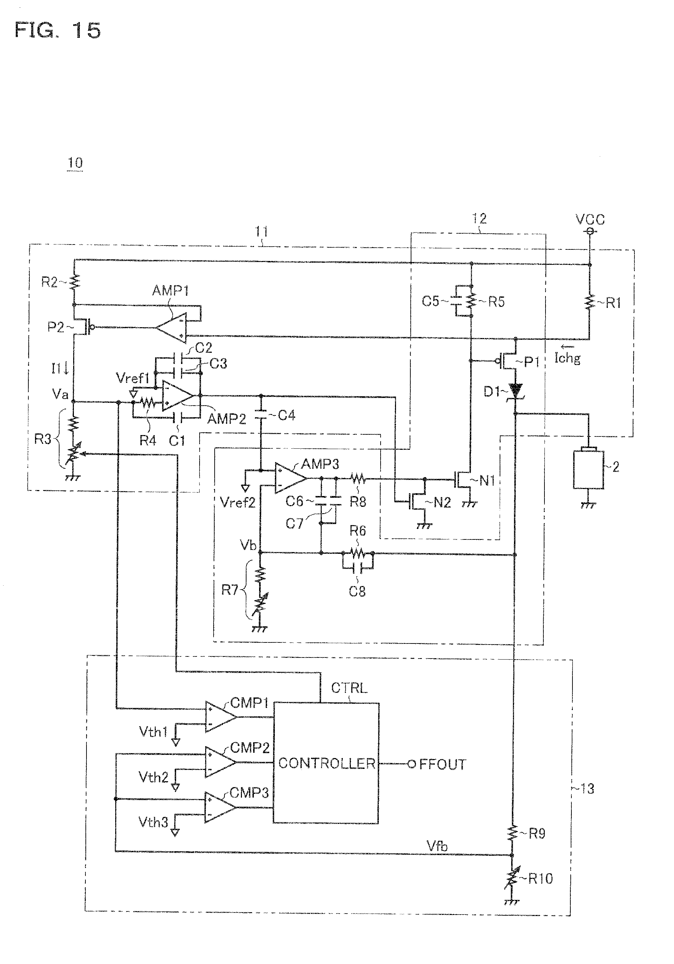

Fig. 15 is a circuit diagram showing a fist construction example (CC/CC/CV charge control in Fig. 14) of the charger 10. The charger 10 of this implementation includes the constant current charge control circuit 11, the constant voltage charge control circuit 12, and the control circuit 13.

The constant current charge control circuit 11 includes PMOS FETs (Field Effect Transistors) P1 and P2, NMOS FETs N1 and N2, a zener diode D1, amplifiers AMP1 and AMP2, resistors R1 to R5, and capacitors C1 to C5.

The constant voltage charge control circuit 12 shares the PMOS FET P1, the NMOS FETs N1 and N2, a zener diode D1, the resistor R5, and the capacitor C5 with the constant current charge control circuit 11, and also includes an amplifiers AMP3, resistors R6 to R8, and capacitors C6 to C8.

The control circuit 13 includes a controller CTRL, comparators CMP1 to CMP3, and the resistors R9 and R10.

A source terminal of the transistor P1 is connected to an input terminal of the power source voltage VCC via a resistor R1. A drain terminal of the transistor P1 is connected to an anode terminal of the zener diode D1. A cathode terminal of the zener diode D1 is connected to a positive terminal of the electrical double-layer capacitor 2. A negative terminal of the electrical double-layer capacitor 2 is connected to the ground terminal. A gate terminal of the transistor P1 is connected to first terminals of the resistor R5 and the capacitor C5. Second terminals of the resistor R5 and the capacitor C5 are connected to the input terminal of the power source voltage VCC. A drain terminal of the transistor N1 is connected to a gate terminal of the transistor P1. A source terminal of the transistor N1 is connected to the ground terminal.

A source terminal of the transistor P2 is connected to the input terminal of the power source voltage VCC via the resistor R2. A drain terminal of the transistor P2 is connected to the ground terminal via the resistor R3. A gate terminal of the transistor P2 is connected to an output terminal of the amplifier AMP1. A non-inverting input terminal (+) of the amplifier AMP1 is connected to a source terminal of the transistor P1. An inverting input terminal (-) of the amplifier AMP1 is connected to a source terminal of the transistor P2. A non-inverting input terminal (+) of the amplifier AMP2 is connected to a first terminal of the resistor R4. A second terminal of the resistor R4 is connected to a drain terminal of the transistor P2, and connected to an output terminal of the amplifier AMP2 via the capacitor C1. An inverting input terminal (-) of the amplifier AMP2 is connected to an input terminal of the first reference voltage Vref1. Capacitors C2 and C3 are connected in parallel with each other between an inverting input terminal (-) of the amplifier AMP2 and an output terminal of the amplifier AMP2. The output terminal of the amplifier AMP2 is connected to a gate terminal of the transistor N2, and connected to an input terminal of the second reference voltage Vref2 via a capacitor C4. A drain terminal of the transistor N2 is connected to a gate terminal of the transistor N1. A source terminal of the transistor N2 is connected to the ground terminal.

A non-inverting input terminal (+) of the amplifier AMP3 is connected to the input terminal of the second reference voltage Vref2. An inverting input terminal (-) of the amplifier AMP3 is connected to the ground terminal via the resistor R7. First terminals of the resistor R6 and the capacitor C8 are connected to the inverting input terminal (-) of the amplifier AMP3. Second terminals of the resistor R6 and the capacitor C8 are connected to the positive terminal of the electrical double-layer capacitor 2. An output terminal of the amplifier AMP3 is connected a gate terminal of the transistor N1 via the resistor R8. First terminals of the capacitors C6 and C7 are connected to the output terminal of the amplifier AMP3. Second terminals of the capacitors C6 and C7 are connected to the inverting input terminal (-) of the amplifier AMP3.

A first terminal of the resistor R9 is connected to the positive terminal of the electrical double-layer capacitor 2. A second terminal of the resistor R9 is connected to the ground terminal via the resistor R10, and also connected to a non-inverting input terminal (+) of the comparator CMP2 and a non-inverting input terminal (+) of the comparator CMP3. A non-inverting input terminal (+) of the comparator CMP1 is connected to a drain terminal of the transistor P2. An inverting input terminal (-) of the comparator CMP1 is connected to an input terminal of a first threshold voltage Vth1 (i.e., a charge completion judgment value). An inverting input terminal (-) of the comparator CMP2 is connected to an input terminal of the second threshold voltage Vth2 (i.e., a charge resume judgment value). An inverting input terminal (-) of the comparator CMP3 is connected to an input terminal of a third threshold voltage Vth3 (i.e., a charge target value).

Thus, the charger 10 which consists of the aforementioned composition includes an output switch (P1) connected between an input terminal of the power source voltage VCC and a positive terminal of the electrical double-layer capacitor 2, also includes a first feedback controller (P2, N1, N2, AMP1, AMP2, R1 to R3, R5) to equalize the first feedback voltage signal Va in response to the charge current Ichg to the electrical double-layer capacitor 2 with the first reference voltage Vref1,and a second feedback controller (N1, N2, AMP3, R5 to R8) to equalize the second feedback voltage signal Vb in response to the charge voltage VCAP to the electrical double-layer capacitor 2 with the second reference voltage Vref2.

The resistor R4 and the capacitors C1 to C8 are phase compensation elements.

Although the control circuit 13 is described as a component of the charger 10 in Fig. 15, with respect to the control circuit 13, functions of the control logic portion 20 or the voltage detector 100 in Fig. 1 can be used to construct the control circuit 13.

### <constant current charge control operation>

With respect to the charger 10 of the aforementioned construction, the constant current charge control circuit 11 performs a feedback control for the transistor P1 to equalize the first feedback voltage signal Va generated at one end of the resistor R3 with the first reference voltage Vref1 Thus the charge current Ichg flowing to the electrical double-layer capacitor 2 is equalized to a predetermined target value (= R2/ (R1*R3)*Vref1.

If the charge current Ichg is larger than the predetermined target value, a gate voltage of the transistor N2 is enlarged. Then a conductivity of the transistor N2 is enlarged and a gate voltage of the transistor N1 is lowered. Therefore a conductivity of the transistor N1 is lowered and a gate voltage of the transistor P1 is enlarged, and a conductivity of the transistor P1 is lowered and the charge current Ichg is lowered. In contrast, if the charge current Ichg is smaller than the target value, a gate voltage of the transistor N2 is lowered, and a conductivity of the transistor N2 is lowered and a gate voltage of the transistor N1 is enlarged. Thus, a conductivity of the transistor N1 is enlarged and a gate voltage of the transistor P1 is lowered, and a conductivity of the transistor P1 is enlarged and the charge current Ichg is enlarged.

In addition, the constant current charge control circuit 11 includes the first feedback current signal generator (R1, R2, P2, AMP1) which generates the first feedback current signal I1 according to the charge current Ichg, and the first feedback voltage signal generator (R3) which generates the first feedback voltage signal Va by performing a current/voltage conversion to the first feedback current signal I1. With respect to the target value of the charge current Ichg, which can be adjusted properly by alternating the resistance of the resistor R3.

### <constant voltage charge control operation>

With respect to the charger 10 consists of the aforementioned composition, the constant voltage charge control circuit 12 performs a feedback control for the transistor P1 to equalize the second feedback voltage Vb generated at a connection node of the resistors R6 and R7 with the second reference voltage Vref2. Furthermore, the charge voltage VCAP supplied to the electrical double-layer capacitor 2 is equalized to a predetermined target value (i.e., R7/(R6+R7)*Vref2).

If the charge voltage VCAP is larger than the predetermined target value, a gate voltage of the transistor N1 is lowered. Therefore a conductivity of the transistor N1 is lowered and a gate voltage of the transistor P1 is enlarged, and a conductivity of the transistor P1 is lowered and the charge voltage VCAP is lowered. In contrast, if the charge voltage VCAP is smaller than the target value, a gate voltage of the transistor N1 is enlarged. Thus, a conductivity of the transistor N1 is enlarged and a gate voltage of the transistor P1 is lowered, and a conductivity of the transistor P1 is enlarged and the charge voltage VCAP is enlarged.

### <switching operation of the charge current>

With respect to a switching operation from the first constant current charge period T1 to the second constant current charge period T1' (in reference to time t32 in Fig. 14), the comparator CMP3 compares a output feedback voltage Vfb generated at a connection node of the resistor R9 and the resistor R10 with the third threshold voltage Vth3 (= a charge target value). When the output feedback voltage Vfb becomes larger than the third threshold voltage Vth3, a resistance control for the resistor R3 by controller CTRL is performed to increase a resistance of the resistor R3.

### <switching operation of the charge control technique>

With respect to the charger 10 consists of the aforementioned construction, the constant current charge control circuit 11 operates mainly until the charge voltage VCAP reaches to a target value. After the charge voltage VCAP reached to the target value the constant voltage charge control circuit 12 operates mainly. Therefore, with respect to a switching operation from the second constant current charge period T1' to the constant voltage charge period T2 (in reference to time t33 in Fig. 14), a switching of a charge control technique is operated automatically without using a specific change controller.

### <charge halt operation>

With respect to a switching operation from the constant voltage charge period T2 to a discharge period T3 (in reference to time t34 in Fig. 14), the comparator CMP1 compares a first feedback voltage signal Va generated at one end of the resistor R3 with the first threshold voltage Vth1 (= a charge completion judgment value). When the first feedback voltage signal Va becomes smaller than the first threshold voltage Vth1, the transistor P1 is turned OFF forcibly by the controller CTRL to halt a charge operation of the electrical double-layer capacitor 2. With respect to a technique to turn OFF the transistor P1 forcibly, any techniques like disabling the amplifier AMP3 (i.e., alters an output level of the amplifier AMP3 to a low level) and turning OFF the transistor N1 forcibly, can be adopted.

### <charge resume operation>

With respect to a charge resumption operation from the charge period T3, the comparator CMP2 compares the output feedback voltage Vfb generated at a connection node between the resistors R9 and R10 with the second threshold voltage Vth2 (i.e., charge resume judgment value). When the output feedback voltage Vfb becomes smaller than the second threshold voltage Vth2, release of the forcibly turned OFF transistor P1 by using the controller CTRL is performed to resume a charge operation to the electrical double-layer capacitor 2.

### <another implementation of the charger>

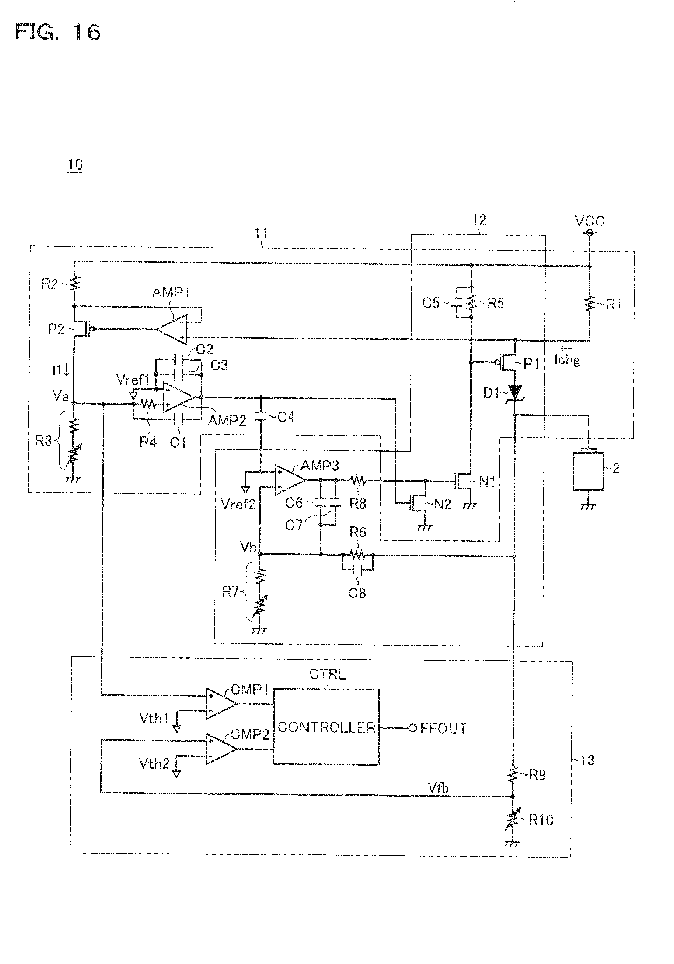

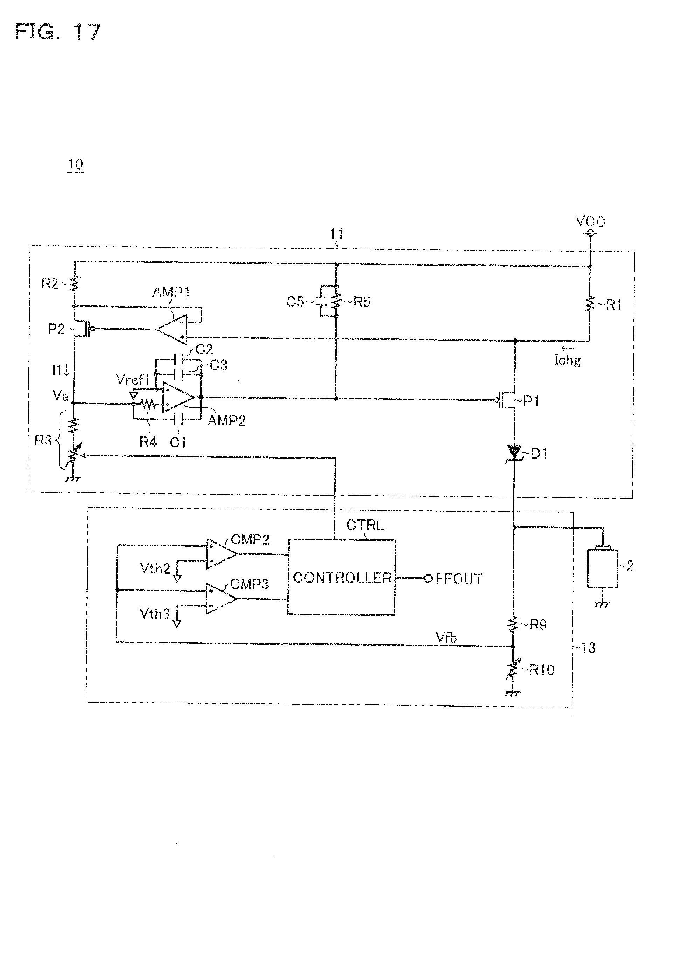

In Fig. 15, as a first construction example of the charger 10, although a construction to realize a CC/CC/CV charge control in Fig. 14 is described, a second construction example in Fig. 16 can be adopted to realize the CC/CV charge control in Fig. 13. With respect to the second construction example, a switching control for the charge current is not required. Therefore, compared to a first construction example in Fig. 15, the comparator CMP3 and a resistance switching signal line from a controller CTRL to the resistor R3 can be omitted. Also, to realize a CC/CC charge control in Fig. 12, a third construction example illustrated in Fig. 17 can be adopted. In this third construction example, a constant voltage charge control is not required. Therefore, compared to a first construction example illustrated in Fig. 15, the constant voltage charge control circuit 12 and the comparator CMP1 is omitted, and an output terminal of the amplifier AMP2 is connected to a gate terminal of the transistor P1 directly.

### <advantage>

A charge control device disclosed in this specification makes it possible to charge an electrical double-layer capacitor properly.

### <industrial applicability>

This disclosure can be used for all kind of applications (i.e., electrical apparatuses) as a technique to charge an electrical double-layer capacitor properly.

### <other implementations>

Furthermore, in addition to the aforementioned implementations, various modifications and alterations can be applied without departing from the scope and the sprit of this invention. Thus, the aforementioned implementations are illustration in all view, and does not restricted to the implementation. The technical scope of the disclosure is interpreted based on the claims, not based on the explanation of the aforementioned implementation. It is understood that any other implementations within the scope of the equivalent of the claims are included in the scope of the disclosure.

### LIST OF REFERENCE NUMERALS

- 1: a charge control device (charge control IC)
- 2: a electrical double-layer capacitor
- 10: a charger
- 11: a constant current charge control circuit
- 12: a constant voltage charge control circuit
- 13: a control circuit
- 20: a control logic portion
- 21: a counter
- 22: a detector
- 23: a logical multiply operation circuit
- 24: a counter
- 25: a detector
- 30: a signal output portion
- 31: a buffer
- 32: a N channel type MOS field effect transistor
- 33, 34: P channel type MOS field effect transistors
- 35, 36: resistors
- 40: a first signal input portion
- 41: a N channel type MOS field effect transistor
- 42: a resistor
- 50: a second signal input portion
- 51, 52: comparators
- 60: a oscillator
- 70: a regulator
- 80: a reference voltage generator
- 90: a power selector
- 100: a voltage detector
- Rx1 to Rx4: resistors (external connected)
- Cx1, Cx2: capacitors (external connected)
- R1 to R10: resistors
- C1 to C7: capacitors
- AMP1, AMP2, AMP3: amplifiers
- P1, P2: P channel type MOS field effect transistors
- N1, N2: N channel type MOS field effect transistors
- D1: a zener diode
- CTRL: controller
- CMP1: comparator (for charge completion judgement)
- CMP2: comparator (for charge resume judgement)
- CMP3: comparator (for charge current switching judgement)

## Claims

1. A charge control device comprising:
a charger to perform a constant current charge control to maintain a charge current to an electric double-layer capacitor as a predetermined charge current value for a constant current charge period after a beginning of a charge of the electric double-layer capacitor.

2. The charge control device according to claim 1, wherein the constant current charge period is a period until a charge voltage of the electric double-layer capacitor rises to a charge target value.

3. The charge control device according to claim 2, wherein the charger performs a constant voltage charge control to maintain the charge voltage as the charge target value for a constant voltage charge period after a lapse of the constant current charge period.

4. The charge control device according to claim 3, wherein the constant voltage charge period is a period until the charge current drops to a charge completion judgment value.

5. The charge control device according to claim 1, wherein the constant current charge period is set repeatedly with the charge current value is decreased.

6. The charge control device according to claim 1, wherein the charger resumes a charge of the electric double-layer capacitor, after a completion of the charge of the electrical double-layer capacitor and when the charge voltage drops to a charge resume judgment value.

7. The charge control device according to claim 1, wherein the charger comprises:
an output switch connected between a power source terminal and the electric double-layer capacitor, and
a first feedback controller to perform a feedback control for the output switch to equalize a first feedback voltage signal according to the charge current with a first reference voltage value.

8. The charge control device according to claim 7, wherein the charger further comprises:
a second feedback controller to perform a feedback control for the output switch to equalize a second feedback voltage signal according to the charge voltage with a second reference voltage.

9. The charge control device according to claim 1 further comprising:
a voltage detector to compare a charge voltage of the electrical double-layer capacitor with an overvoltage protection value.

10. The charge control device according to claim 9 further comprising:
a control logic portion to stop a charge for the electrical double-layer when an overvoltage state of the charge voltage is detected.

11. The charge control device according to claim 2 further comprising:
a voltage detector to compare the charge voltage of the electrical double-layer capacitor with the charge target value.

12. The charge control device according to claim 6 further comprising:
a voltage detector to compare a charge voltage of the electrical double-layer capacitor with the charge resume judgment value.

13. The charge control device according to claim 1 further comprising:
a voltage detector to compare a charge voltage of the electrical double-layer capacitor with a low voltage protection value.

14. The charge control device according to claim 13 further comprising:
a control logic portion to stop a charge for the electrical double-layer when an low voltage state of the charge voltage is detected.

15. The charge control device according to claim 7, wherein the first feedback controller comprises:
a first feedback current signal generator to generate a first feedback current signal according to the charge current; and
a first feedback voltage signal generator to generate the first feedback voltage signal by performing a current/voltage conversion for the first feedback current signal.

16. The charge control device according to claim 15, wherein the first feedback voltage signal generator is a resistor to which the first feedback current signal is flowing.

17. The charge control device according to claim 16, wherein the resistance of the resistor is controlled variably on the occasion of the conversion of the charge current value.
